# EUROPÄISCHE PATENTSCHRIFT

(11) **EP 3 678 751 B1**
(45) Veröffentlichungstag und Bekanntmachung des Hinweises auf die Patenterteilung: **26.05.2021**
(21) Anmeldenummer: 18758565.8
(22) Anmeldetag: 14.08.2018
(51) Int. Cl.: A63G 7/00, B60R 22/48

(54) **FAHRGASTAUFNAHME UND FAHRZEUG MIT MINDESTENS EINER DERARTIGEN FAHRGASTAUFNAHME FÜR EIN FAHRGESCHÄFT, VERFAHREN ZUM BETREIBEN EINES FAHRZEUGS SOWIE FAHRGESCHÄFT MIT MINDESTENS EINEM SOLCHEN FAHRZEUG**
RIDER HOLDER AND VEHICLE HAVING AT LEAST ONE SUCH RIDER HOLDER FOR AN AMUSEMENT RIDE, METHOD FOR OPERATING A VEHICLE, AND AMUSEMENT RIDE HAVING AT LEAST ONE SUCH VEHICLE
ACCUEIL DE PASSAGER ET VÉHICULE COMPORTANT AU MOINS UN ACCUEIL DE PASSAGER POUR MANÈGE, PROCÉDÉ POUR FAIRE FONCTIONNER UN VÉHICULE ET MANÈGE ÉQUIPÉ D'AU MOINS UN TEL VÉHICULE

(30) Priorität: 07.09.2017 DE 102017120645
(43) Veröffentlichungstag der Anmeldung: 15.07.2020
(73) Patentinhaber: Mack Rides GmbH & Co. KG, 79183 Waldkirch (DE)
(72) Erfinder: BECHERER, Markus, 79215 Elzach (DE); SCHRADE, Stephan, 79331 Teningen (DE)
(74) Vertreter: Westphal, Mussgnug & Partner Patentanwälte mbB
(86) Internationale Anmeldenummer: PCT/EP2018/072001
(87) Internationale Veröffentlichungsnummer: WO 2019/048194

(56) Entgegenhaltungen:
- EP-A1- 3 003 789
- DE-A1-102007 032 171
- US-A- 5 015 933

## Beschreibung

Die vorliegende Erfindung betrifft eine Fahrgastaufnahme für ein Fahrgeschäft. Zudem betrifft die Erfindung ein Fahrzeug mit mindestens einer derartigen Fahrgastaufnahme für ein Fahrgeschäft und ein Verfahren zum Betreiben eines solchen Fahrzeugs. Weiterhin betrifft die Erfindung ein Fahrgeschäft mit mindestens einem solchen Fahrzeug.

Um Fahrgeschäfte wirtschaftlich betreiben zu können, spielt die Attraktivität der Fahrgeschäfte eine sehr wichtige Rolle. Man ist daher bestrebt, möglichst viele für den Fahrgast überraschende Fahrerlebnisse zu realisieren. In Bezug auf Achterbahnen werden diese Fahrerlebnisse unter anderem mit Loopings, mit scharfen Kurven, mit Streckenabschnitten mit großen Steigungen sowie mit schraubenförmigen Streckenabschnitten realisiert.

Diese Fahrerlebnisse können nur dann realisiert werden, wenn die Fahrgäste sicher im Fahrgeschäft rückgehalten werden können. Hierzu weisen die Fahrgeschäfte eine Anzahl von Fahrzeugen mit Fahrgastaufnahmen auf, in welche sich die Fahrgäste hineinsetzen, hineinstellen oder hineinlegen können. In den Fahrgastaufnahmen werden die Fahrgäste mithilfe von Rückhalteeinrichtungen, die häufig Sicherungsbügel umfassen, gesichert. Die Rückhalteeinrichtungen und insbesondere die Sicherungsbügel werden hierzu von einer Offenstellung, in welcher der Zugang zur Fahrgastaufnahme für den Fahrgast freigegeben ist, in eine Schließstellung verstellt, in welcher der Fahrgast derart in der Fahrgastaufnahme mit der Rückhalteeinrichtung zusammenwirkt, dass er während der Fahrt auch bei hohen Beschleunigungen und Belastungen nicht aus der Fahrgastaufnahme herausfallen kann. Der Sicherungsbügel kann mithilfe einer Verstelleinrichtung zwischen der Offenstellung und der Schließstellung verstellt werden. Die Verstelleinrichtung wird üblicherweise mittels eines Hydrauliksystems betrieben. Es ist aber auch denkbar, die Verstelleinrichtung mechanisch, elektrisch oder pneumatisch zu betreiben. Es ist aber auch möglich, dass der Sicherungsbügel vom Fahrgast selbst oder von einem Mitarbeiter des Fahrgeschäfts zwischen der Offenstellung und der Schließstellung verstellt wird.

Damit der Fahrgast während der Fahrt nicht aus der Fahrgastaufnahme herausfallen kann, muss die Rückhalteeinrichtung in der Schließstellung fixiert werden. Hierzu können verriegelbare Sicherungseinrichtungen verwendet werden, welche im verriegelten Zustand die Rückhalteeinrichtung in der Schließstellung fixieren und in einem entriegelten Zustand die Rückhalteeinrichtung freigeben. Die Sicherungseinrichtungen können sehr unterschiedlich ausgestaltet sein und die Rückhalteeinrichtung beispielsweise mechanisch, pneumatisch oder hydraulisch in der Schließstellung fixieren, so dass der Begriff "verriegelbar" das Vorhandensein eines mechanischen Riegels nicht voraussetzt.

In vielen Fällen muss entweder der Fahrgast oder ein Mitarbeiter des Fahrgeschäfts die Sicherungseinrichtung in den verriegelten Zustand überführen. Hierbei kann es zu Fehlbedienungen kommen, so dass die Sicherungseinrichtung nicht sicherstellen kann, dass die Rückhalteeinrichtung in der Schließstellung fixiert wird. Hierdurch kann die Sicherheit des Fahrgasts nicht gewährleistet werden, was unter allen Umständen vermieden werden muss. Um zu verhindern, dass eine Fahrt trotz einer Fehlbedienung der Sicherungseinrichtung begonnen wird, sind beispielsweise aus der US 7 837 566 B2 Kontrolleinheiten bekannt, welche feststellen können, ob die Sicherungseinrichtung korrekt verriegelt worden ist. Einige Kontrolleinheiten sind so eingerichtet, dass eine Fahrt nicht begonnen werden kann, wenn die Kontrolleinheiten feststellen, dass zumindest eine der Sicherungseinrichtungen nicht verriegelt ist. Die Kontrolleinheiten sind aber nicht in der Lage, ihren eigenen Zustand zu beschreiben und auf Störungen hinzuweisen. Es kann daher vorkommen, dass die Kontrolleinheit dahingehend nicht einwandfrei funktioniert, als dass sie meldet, dass die Sicherungseinrichtung verriegelt ist, obwohl dies nicht der Fall ist. Dies ist insofern problematisch, als dass die Mitarbeiter des Fahrgeschäfts geneigt sein können, sich auf die Aussage der Kontrolleinheit zu verlassen und auf manuelle oder visuelle Überprüfungen der Sicherungseinrichtung zu verzichten.

Die Sicherungseinrichtungen sind in vielen Fällen in Reichweite des Fahrgasts angeordnet. Bei Kontrolleinheiten, die wie beschrieben eingerichtet sind, können die Fahrgäste den Beginn einer Fahrt dadurch verhindern oder verzögern, dass sie absichtlich die Sicherungseinrichtung nicht in den verriegelten Zustand überführen oder wieder entriegeln. Darüber hinaus können die Fahrgäste beispielsweise mitgebrachte Metallplatten so in die Sicherungseinrichtung einbringen, dass die Kontrolleinheiten die Verriegelung der Sicherungseinrichtung feststellen, obwohl dies nicht der Fall ist. Folglich kann eine Fahrt begonnen werden, obwohl zumindest eine der Sicherungseinrichtungen nicht verriegelt ist, was zu unabsehbaren Folgen führen kann.

Weiteren Stand der Technik bilden die DE 10 2007 032 171 A sowie die gattungsbildende US 5 015 933 A.

Aufgabe einer Ausführungsform der vorliegenden Erfindung ist es, eine Fahrgastaufnahme anzugeben, mit welcher die Sicherheit des Betriebs eines Fahrgeschäfts erhöht werden kann und von Fahrgästen hervorgerufene Verzögerungen vermieden werden können. Insbesondere soll eine Fahrgastaufnahme angegeben werden, mit welcher feststellbar ist, ob sich die Sicherungseinrichtung tatsächlich im verriegelten Zustand befindet.

Des Weiteren liegt einer Ausgestaltung und einer Umsetzung der vorliegenden Erfindung die Aufgabe zugrunde, ein Fahrzeug für ein Fahrgeschäft und ein Fahrgeschäft zu schaffen, welche mit einer erhöhten Sicherheit und weniger Verzögerungen betrieben werden können. Darüber hinaus liegt eine Ausbildung der Erfindung die Aufgabe zugrunde, ein Verfahren zum Betreiben eines derartigen Fahrzeugs bereitzustellen.

Diese Aufgabe wird mit den in den Ansprüchen 1, 14, 17 und 22 angegebenen Merkmalen gelöst. Vorteilhafte Ausführungsformen sind Gegenstand der Unteransprüche.

Die Erfindung betrifft eine Fahrgastaufnahme für ein Fahrgeschäft, umfassend einen Aufnahmeabschnitt zum Aufnehmen eines Fahrgasts, eine Rückhalteeinrichtung, welche zwischen einer Offenstellung, in welcher der Zugang zum Aufnahmeabschnitt für den Fahrgast ermöglicht ist, und einer Schließstellung, in welcher der aufgenommene Fahrgast im Aufnahmeabschnitt mit der Rückhalteeinrichtung zusammenwirken kann, verstellbar ist, eine verriegelbare Sicherungseinrichtung, welche in einem verriegelten Zustand die Rückhalteeinrichtung in der Schließstellung fixiert und in einem entriegelten Zustand die Rückhalteeinrichtung freigibt, und eine Kontrolleinheit, die die Erkennungsmittel aufweist, mit welchen redundant und ausfallsicher feststellbar ist, ob sich die Sicherungseinrichtung im verriegelten oder entriegelten Zustand befindet, wobei die Kontrolleinheit entsprechende Zustandssignale erzeugt.

Unter "ausfallsicher" soll folgendes verstanden werden: Die Zustandssignale enthalten nicht nur eine Information darüber, ob sich die Sicherungseinrichtung im verriegelten Zustand befindet, sondern auch darüber, ob die Kontrolleinheit einwandfrei funktioniert. Die Erkennungsmittel sind redundant ausgestaltet, so dass die Fehlfunktion eines Erkennungsmittels nicht zu Zustandssignalen führt, welche nicht den tatsächlichen Zustand der Sicherungseinrichtung wiedergibt. Zudem ist die Kontrolleinheit so ausgestaltet, dass der Ausfall oder die Fehlfunktion eines oder aller Erkennungsmittel erkannt wird. Die Kontrolleinheit ist zumindest bezüglich der Erkennungsmittel selbstprüfend. Hierzu kann die Kontrolleinheit beispielsweise einen Prüfschaltkreis aufweisen, in welchem die mindestens zwei Erkennungsmittel in Reihe geschaltet werden. Der Prüfschaltkreis führt eine Widerstandsmessung durch. Wenn einer oder alle der Erkennungsmittel fehlerhaft arbeiten, ändert sich der Widerstand.

Die Information, ob die Kontrolleinheit fehlerfrei arbeitet oder nicht, ist ebenfalls in den Zustandssignalen enthalten. Insofern kann der Betrieb des Fahrgeschäfts allein schon deshalb unterbrochen werden, wenn die Erkennungsmittel nicht einwandfrei funktionieren. Hierdurch wird verhindert, dass das Fahrgeschäft betrieben wird, ohne dass der Zustand der Sicherungseinrichtung zweifelsfrei feststellbar ist. Die Betriebssicherheit des Fahrgeschäfts wird hierdurch erhöht.

Erfindungsgemäß weist die Kontrolleinheit Manipulationsdetektionsmittel auf, mit welchen manipulationssicher feststellbar ist, ob sich die Sicherungseinrichtung im verriegelten oder entriegelten Zustand befindet, wobei die Kontrolleinheit entsprechende Zustandssignale erzeugt.

Der Betrieb des Fahrgeschäfts wird insbesondere dadurch sicherer, dass die Kontrolleinheit und/oder die Sicherungseinrichtung manipulationssicher ausgestaltet sind. Die manipulationssichere Ausgestaltung wird erfindungsgemäß dadurch realisiert, dass nur befugte Personen, insbesondere die Mitarbeiter des Fahrgeschäfts, die Sicherungseinrichtung in den verriegelten Zustand überführen können. Hierzu können die Manipulationsdetektionsmittel Näherungssensoren umfassen, welche die Mitarbeiter des Fahrgeschäfts tragen, so dass die Sicherungseinrichtung nur dann in den verriegelten Zustand überführt werden kann, wenn sich der Mitarbeiter in unmittelbarer Nähe der Sicherungseinrichtung aufhält.

Zudem kann die Sicherungseinrichtung so eingerichtet sein, dass der einmal eingenommene verriegelte Zustand sofort festgehalten und erst nach dem Ende der Fahrt wieder verändert werden kann. Insbesondere bei älteren Fahrgeschäften ist es möglich, die Sicherungseinrichtung während der Fahrt wieder in den entriegelten Zustand zu stellen. Auch bei moderneren Fahrgeschäften wird der verriegelte Zustand erst kurz vor Beginn bis zum Ende der Fahrt aufrechterhalten, so dass der eingestiegene Fahrgast bis dahin die Möglichkeit hat, die Sicherungseinrichtung wieder in den entriegelten Zustand zu stellen und den Betriebsablauf zu verzögern.

Aufgrund der Möglichkeit, manipulationssicher feststellen zu können, ob die Sicherungseinrichtung im verriegelten oder entriegelten Zustand befindet, wird der Betriebsablauf sicherer und planmäßiger. Dadurch, dass die Kontrolleinheit Zustandssignale erzeugt, kann sofort festgestellt werden, ob sich die Sicherungseinrichtung im verriegelten oder entriegelten Zustand befindet. Die Mitarbeiter des Fahrgeschäfts können sofort eingreifen und die resultierenden Verzögerungen im Betriebsablauf gering halten.

Nach Maßgabe einer weiteren Ausführungsform weist die Sicherungseinrichtung ein an der Fahrgastaufnahme oder an der Rückhalteeinrichtung befestigtes Halteelement und ein relativ zum Halteelement bewegbares Gegenelement auf, wobei das Gegenelement im verriegelten Zustand der Sicherungseinrichtung vom Halteelement ortsfest gehalten wird und die Manipulationsdetektionsmittel zumindest auf dem Gegenelement angeordnete Identifizierungsmittel umfassen, die von der Kontrolleinheit auslesbar sind. Das Halteelement ist fest an der Fahrgastaufnahme oder an der Rückhalteeinrichtung befestigt, wohingegen das Gegenelement eine Relativbewegung zum Halteelement ausführen kann. Beispielsweise können das Haltelement als ein Vorsprung und das Gegenelement nach Art einer Schlossfalle oder umgekehrt ausgebildet sein, so dass eine formschlüssige Verbindung im verriegelten Zustand erzeugt wird. Alternativ können Magnetkräfte erzeugt werden, mit denen das Gegenelement vom Halteelement gehalten wird.

Mit den Identifizierungsmitteln lässt sich eindeutig feststellen, dass nur das vorgesehene Gegenelement mit dem Halteelement zusammenwirkt. Die Identifizierungsmittel können beispielsweise als auf dem Gegenelement aufgebrachte Barcodes, Transponder oder RFID-Chips ausgestaltet werden. Es bietet sich an, die Identifizierungsmittel so auf dem Gegenelement anzubringen, dass sie für das menschliche Auge nicht sichtbar sind. Hierdurch kann ein mutwilliges Zerstören der Identifizierungsmittel verhindert werden. Eine Manipulation wird so verhindert.

In einer weitergebildeten Ausführungsform kann die Sicherungseinrichtung einen betätigbaren Sicherheitsschalter aufweisen, welcher zum Fixieren und Freigeben der Rückhalteeinrichtung mit dem Halteelement zusammenwirkt. Die Verwendung eines Sicherheitsschalters hat insbesondere den Vorteil, dass dieser in ein Steuerkreis eingebunden und damit ferngesteuert werden kann. Zudem kann der Sicherheitsschalter mit einer Kennung versehen werden, so dass die Zustandssignale eindeutig einer bestimmten Kontrolleinheit zugeordnet werden können. Die Mitarbeiter des Fahrgeschäfts bekommen somit eine Information, welche der Sicherungseinrichtungen sich im verriegelten Zustand befinden und welche nicht. Für den Fall, dass die Mitarbeiter eingreifen müssen, wissen sie, welche Fahrgastaufnahme betroffen ist, so dass ein langwieriges Suchen entfällt.

Bei einer weitergebildeten Ausführungsform kann das Halteelement vom Sicherheitsschalter gebildet werden. Hierdurch entsteht eine kompakte Baugruppe, die sich einfach montieren lässt. Weiterhin wird die Anzahl der Bauteile verringert, wodurch die Fehlerwahrscheinlichkeit reduziert wird.

Eine weitergebildete Ausführungsform zeichnet sich dadurch aus, dass die Kontrolleinheit und insbesondere der Sicherheitsschalter derart eingerichtet sind, dass auf PLe-Niveau oder auf SIL3-Niveau feststellbar ist, ob sich die Sicherungseinrichtung im verriegelten Zustand befindet. Unter PL ist ein sogenannter Performance Level zu verstehen, der nach der Norm EN 13849 definiert ist. Der Performance Level ist ein Maß für die Zuverlässigkeit einer Sicherheitsfunktion, wobei das Niveau a die geringste Stufe und das Niveau e die höchste Stufe darstellen. SIL steht für Sicherheitsintegritätslevel und beschreibt ebenfalls die Zuverlässigkeit von Sicherheitsfunktionen. Das Niveau PLe sowie das SIL3-Niveau garantieren einen hohen Beitrag zur Risikoreduzierung. Entsprechend hoch ist die Sicherheit, mit welcher das Fahrgeschäft betrieben werden kann.

Nach einer weiteren Ausführungsform sind die Kontrolleinheit und die stationären Komponenten der Sicherungseinrichtung zu einer Baueinheit zusammengefasst. Grundsätzlich können die Funktionen der Sicherungseinrichtung und der Kontrolleinheit auf verschiedene Untereinheiten, die räumlich getrennt angeordnet sein können, verteilt werden. Insofern sind die Begriffe "Sicherungseinrichtung" und "Kontrolleinheit" nicht so aufzufassen, dass es sich hierbei um baulich zusammenhängende Einheiten handeln muss. Beispielsweise können die Erkennungsmittel, die beispielsweise optisch oder induktiv arbeiten können, räumlich getrennt zu einem Analyseelement angeordnet sein, welche die Signale der Erkennungsmittel analysiert und das Zustandssignal generiert. Die Übermittlung des Zustandssignals an die Mitarbeiter des Fahrgeschäfts, kann wiederum von einer anderen Einheit übernommen werden.

Es bietet es sich jedoch insbesondere an, die Kontrolleinheit und die stationären Komponenten Sicherungseinrichtung im Sicherheitsschalter zusammenzufassen. Unter stationären Komponenten sollen die Komponenten verstanden werden, welche ortsfest in der Fahrgastaufnahme verbaut sind oder sich auf einer vorgegebenen Bahn zwischen genau definierbaren Positionen innerhalb der Fahrgastaufnahme bewegen. Beispielsweise bildet das Gegenelement keine stationäre Komponente, da diese relativ zum Halteelement bewegbar sein muss, ohne dass ihre Bahn vorgegeben ist. Das Halteelement ist auf einer vorgegebenen zwischen zwei genau definierbaren Positionen innerhalb der Fahrgastaufnahme bewegbar und bildet daher trotz seiner Beweglichkeit eine stationäre Komponente.

Das Zusammenfassen der stationären Komponenten der Sicherungseinrichtung und der Kontrolleinheit zu einer Baueinheit hat insbesondere bei der Montage Vorteile, da die Verkabelung der Kontrolleinheit und der verschiedenen Komponenten der Sicherungseinrichtung entfällt oder zumindest deutlich vereinfacht wird. Zudem wird die Logistik und die Lagerhaltung vereinfacht, da nur eine Baueinheit bevorratet werden muss und nicht eine größere Anzahl von einzelnen Komponenten.

Auch wenn es sich anbietet, alle stationären Komponenten der Sicherungseinrichtung und die Kontrolleinheit und damit ihre Funktionen zu einer Baueinheit zusammenzufassen, kann es im Einzelfall dennoch vorteilhaft sein, eine oder mehrere Funktionen von einem oder mehreren außerhalb der Baueinheit angeordneten Elementen durchführen zu lassen. Die Art und die Anzahl der Funktionen, die von außerhalb der Baueinheit angeordneten Elementen durchgeführt wird, sind dabei frei wählbar.

Bei einer weiteren Ausführungsform kann das Gegenelement selbstöffnend mit dem Halteelement zusammenwirken. Unter einem selbstöffnenden Zusammenwirken ist zu verstehen, dass dann, wenn die Sicherungseinrichtung in den entriegelten Zustand gestellt wird, nicht nur das Gegenelement freigegen, sondern dabei auch weg vom Halteelement bewegt wird. Dies kann beispielsweise dadurch erreicht werden, dass beim Bewegen des Gegenelements zum Halteelement eine mit dem Gegenelement zusammenwirkende Feder vorgespannt wird, die im verriegelten Zustand vom Halteelement vorgespannt gehalten wird und im entriegelten Zustand freigegeben wird. Beim Freigeben bewegt die Feder das Gegenelement weg vom Halteelement. Hierdurch bekommt der Fahrgast eine eindeutige Rückmeldung, dass die Sicherungseinrichtung entriegelt worden ist. Der Fahrgast selbst muss diesbezüglich nichts unternehmen. Zudem wird verhindert, dass der Fahrgast auf die Entriegelung wartet, die von ihm unbemerkt bereits erfolgt ist. Der Fahrgast wird hierdurch ermuntert, unmittelbar nach erfolgter Entriegelung die Fahrgastaufnahme zu verlassen. Hierdurch wird der Durchsatz des Fahrgeschäfts erhöht.

Nach Maßgabe einer weiteren Ausführungsform ist das Gegenelement als eine Gurtzunge ausgebildet, welche an einem mit der Rückhalteeinrichtung oder der Fahrgastaufnahme verbundenen Gurt befestigt ist. Gurtsysteme mit Gurtzungen und Gurten als Zugkraftübertragungsmittel sind kostengünstig in der Anschaffung, zuverlässig im Betrieb und einfach zu bedienen und auszutauschen.

Eine weitere Ausführungsform zeichnet sich dadurch aus, dass der Gurt eine Gurtlängenverstelleinrichtung umfasst. Eine Gurtlängenverstelleinrichtung ermöglicht es dem Fahrgast und/oder dem Mitarbeiter, die wirksame Gurtlänge auf seine Körpermaße anzupassen, so dass er einerseits bequem und andererseits sicher in der Fahrgastaufnahme aufgenommen ist.

Eine weitere Ausführungsform ist dadurch gekennzeichnet, dass der Gurt an seinem freien Ende einen Griffabschnitt, insbesondere eine Gurtschlaufe bildet. Der Griffabschnitt, insbesondere die Gurtschlaufe erleichtert das Ergreifen des Gurts und insbesondere die Verstellung der Gurtlänge. Alternativ zur Gurtschlaufe kann ein gut greifbarer Gegenstand wie ein Ball in den Gurt eingearbeitet werden, um den Griffabschnitt zu realisieren.

In einer weiteren Ausführungsform kann der Gurt an seinem festen Ende mit einem Entlastungselement verbunden sein. Es bietet sich an, die Feststelleinheit so auszulegen, dass sie den größten Teil der während des Betriebs auf die Rückhalteeinrichtung wirkenden Kräfte aufnimmt. Das Entlastungselement sorgt dafür, dass der Gurt während des Betriebs nur unter deutlich reduzierter Last betrieben wird, wodurch der Verschleiß des Gurts vermindert wird. Er muss entsprechend seltener ausgetauscht werden. Das Entlastungselement selbst kann entweder an der Fahrgastaufnahme oder an einer geeigneten Stelle des Fahrzeugs befestigt werden.

Bei einer weiteren Ausführungsform weist die Fahrgastaufnahme eine Feststelleinheit, mit welcher die Rückhalteeinrichtung zumindest in der Schließstellung feststellbar ist, auf. In diesem Fall wird die Rückhalteeinrichtung von zwei getrennten Systemen in der Schließstellung gehalten, so dass eine Redundanz für den Fall geschaffen wird, dass die Feststelleinheit ausfällt. Dann wird die Rückhalteeinrichtung von der Sicherungseinrichtung in der Schließstellung gehalten.

In einer fortgebildeten Ausführungsform umfasst die Fahrgastaufnahme eine Prüfeinheit, mit welcher die Funktionsfähigkeit der Feststelleinheit feststellbar ist, wobei die Prüfeinheit entsprechende Funktionsfähigkeitssignale erzeugt. Beispielsweise kann die Feststelleinheit hydraulisch oder pneumatisch betrieben werden. Mittels der Prüfeinheit kann ermittelt werden, ob die Feststelleinheit einwandfrei funktioniert. Sollte dies nicht der Fall sein, erzeugt die Prüfeinheit entsprechende Funktionsfähigkeitssignale, so dass insbesondere die Mitarbeiter des Fahrgeschäfts entsprechende Gegenmaßnahmen ergreifen können. An dieser Stelle sei darauf hingewiesen, dass die Funktionsfähigkeit der Feststelleinheit auch ohne die Prüfeinheit überprüft werden kann, beispielsweise mittels einer manuellen und/oder visuellen Inspektion der Rückhalteeinrichtung, welche von den Mitarbeitern des Fahrgeschäfts durchgeführt wird.

Eine Ausgestaltung der Erfindung betrifft ein Fahrzeug für ein Fahrgeschäft, welches mindestens eine Fahrgastaufnahme nach einem der vorherigen Ausführungsformen aufweist.

Die technischen Effekte und Vorteile, die sich mit dem vorschlagsgemäßen Fahrzeug erreichen lassen, entsprechen denjenigen, die für die vorliegende Fahrgastaufnahme erörtert worden sind. Zusammenfassend sei darauf hingewiesen, dass das Fahrzeug mit einer erhöhten Sicherheit und mit weniger von den Fahrgästen verursachten Verzögerungen betrieben werden kann, da Manipulationen seitens der Fahrgäste an der Sicherungseinrichtung erschwert oder unmöglich werden.

In einer weiteren Ausgestaltung kann das Fahrzeug mindestens zwei der Fahrgastaufnahmen und ein mit der Kontrolleinheit kommunizierendes Kommunikationssystem aufweisen, mit welchem die Zustandssignale der Kontrolleinheit der betreffenden Fahrgastaufnahme eindeutig zuordenbar sind. Die Kontrolleinheit ist mit einer Kennung versehen, welche vom Kommunikationssystem auslesbar ist und eine Zuordnung der Kontrolleinheit zu der von ihr kontrollierten Fahrgastaufnahme ermöglicht. Die Mitarbeiter des Fahrgeschäfts erhalten dadurch eine Information darüber, welche Sicherungseinrichtungen sich im verriegelten Zustand befinden und welche nicht. Für den Fall, dass ein Eingreifen der Mitarbeiter erforderlich sein sollte, entfällt ein langwieriges Suchen. Verzögerungen im Betriebsablauf werden hierdurch gering gehalten.

In einer weiteren Ausgestaltung kommuniziert das Kommunikationssystem mit der Prüfeinheit derart, dass die Funktionsfähigkeitssignale der Prüfeinheit der betreffenden Fahrgastaufnahme zuordenbar sind. Wie erwähnt, kann mittels der Prüfeinheit ermittelt werden, ob die Feststelleinheit einwandfrei funktioniert. Sollte dies nicht der Fall sein, erzeugt die Prüfeinheit entsprechende Funktionsfähigkeitssignale, so dass insbesondere die Mitarbeiter des Fahrgeschäfts entsprechende Gegenmaßnahmen ergreifen können. Auch die Prüfeinheit ist mit einer Kennung versehen, welche vom Kommunikationssystem auslesbar ist und eine Zuordnung der Prüfeinheit zu der von ihr geprüften Fahrgastaufnahme ermöglicht. Für den Fall, dass ein Eingreifen der Mitarbeiter erforderlich sein sollte, entfällt ein langwieriges Suchen. Verzögerungen im Betriebsablauf werden hierdurch gering gehalten.

Eine Ausbildung der Erfindung betrifft ein Verfahren zum Betreiben eines Fahrzeugs nach einem der vorherigen Ausgestaltungen, umfassend folgende Schritte:
- Bewegen der Rückhalteeinrichtung in die Schließstellung,
- Fixieren der Rückhalteeinrichtung in der Schließstellung mittels der Sicherungseinrichtung, die in den verriegelten Zustand versetzt wurde, und
- redundantes und ausfallsicheres Feststellen, ob sich die Sicherungseinrichtung im verriegelten Zustand befindet mittels der Erkennungsmittel und Erzeugen eines entsprechenden Zustandssignals mittels der Kontrolleinheit.

Die technischen Effekte und Vorteile, die sich mit dem vorschlagsgemäßen Verfahren erreichen lassen, entsprechen denjenigen, die für die vorliegende Fahrgastaufnahme erörtert worden sind. Ein hervorzuhebender Punkt ist, dass es mit dem vorschlagsgemäßen Verfahren möglich ist, eine Aussage über die Funktionsfähigkeit der Erkennungsmittel zu treffen und bereits bei Ausfall eines der redundant ausgelegten Erkennungsmittel mittels der Zustandssignale einen entsprechenden Hinweis zu erhalten, so dass sofort oder zeitnah Gegenmaßnahmen ergriffen werden können.

Das erfindungsgemäße Verfahren sieht weiter vor, dass:
- die Sicherungseinrichtung nur durch befugte Personen in den verriegelten Zustand überführt werden kann und
- manipulationssicher feststellbar ist, ob sich die Sicherungseinrichtung im verriegelten Zustand befindet mittels der Manipulationsdetektionsmittel und Erzeugen eines entsprechenden Signals mittels der Kontrolleinheit.

Das betreffende Fahrzeug kann mit einer erhöhten Sicherheit und mit weniger von den Fahrgästen verursachten Verzögerungen betrieben werden, da Manipulationen seitens der Fahrgäste an der Sicherungseinrichtung erschwert oder unmöglich werden.

In einer weiteren Ausbildung umfasst das Verfahren folgende Schritte:
- Prüfen der Funktionsfähigkeit der Feststelleinheit und Erzeugen von entsprechenden Funktionsfähigkeitssignalen mittels der Prüfeinheit.

In dieser Ausbildung kann festgestellt werden, ob die Feststelleinheit einwandfrei funktioniert. Anhand der Funktionsfähigkeitssignale haben die Mitarbeiter des Fahrgeschäfts eine aktuelle Information über den Zustand der Feststelleinheit.

Wenn eine Feststelleinheit nicht einwandfrei funktioniert, können sofort Gegenmaßnahmen ergriffen werden, wodurch die Betriebssicherheit erhöht wird.

In einer weiterführenden Ausbildung weist das Verfahren folgende Schritte auf:
- Zuordnen der Funktionsfähigkeitssignale der betreffenden Fahrgastaufnahme mittels des Kommunikationssystems, und
- für den Fall, dass die Funktionsfähigkeit der Feststelleinheit der betreffenden Fahrgastaufnahme nicht gegeben ist, Sperren der betreffenden Fahrgastaufnahme durch Fixieren der Rückhalteeinrichtung in der Schließstellung.

Über das Kommunikationssystem ist es möglich, sofort die Fahrgastaufnahme zu identifizieren, deren Feststelleinheit nicht einwandfrei funktioniert. In diesem Fall wird die betreffende Fahrgastaufnahme gesperrt, so dass diese nicht mehr von einem Fahrgast genutzt werden kann. Dies kann dadurch geschehen, dass die Rückhalteeinrichtung mittels eines Seils in eine Stellung gebracht wird, in welcher sie der Zugang zum Aufnahmeabschnitt der Fahrgastaufnahme versperrt. Hierdurch wird verhindert, dass die betreffende Fahrgastaufnahme trotz nicht einwandfrei funktionierender Feststelleinheit genutzt wird. Dennoch können die übrigen Fahrgastaufnahmen, bei denen die Feststelleinheiten einwandfrei funktionieren, weiter genutzt werden.

Bei bekannten Fahrgeschäften werden sämtliche Sicherungsbügel einer Reihe von Fahrgastaufnahmen eines Fahrzeugs vom selben Hydraulikreislauf betätigt. Üblicherweise sind mindestens vier Fahrgastaufnahmen in einer Reihe angeordnet. Wenn die Feststelleinheit bei einer Fahrgastaufnahme nicht einwandfrei funktioniert, muss die gesamte Reihe der Fahrgastaufnahmen stillgelegt werden, wodurch die Kapazität des Fahrgeschäfts deutlich verringert wird.

Vorschlagsgemäß wird nur die tatsächlich betroffene Fahrgastaufnahme stillgelegt. Die nicht einwandfrei funktionierende Fahrgastaufnahme kann nach Betriebsschluss repariert oder ausgetauscht werden. Die Kapazität des Fahrgeschäfts wird hierdurch nur um das absolut notwendige Maß eingeschränkt.

Eine fortgebildete Ausbildung des Verfahrens umfasst folgende Schritte:
- Fixieren der Rückhalteeinrichtung in der Schließstellung durch Verriegeln der Sicherungseinrichtung.

Da die Sicherungseinrichtung ohnehin vorhanden ist, kann sie für den Fall, dass die Feststelleinheit nicht einwandfrei funktioniert, genutzt werden, um die Rückhalteeinrichtung in der Schließstellung zu fixieren und um zu verhindern, dass ein Fahrgast Zugang zu der betreffende Fahrgastaufnahme erhält. Zusätzliche Mittel zum Fixieren der Rückhalteeinrichtung in der Schließstellung werden nicht benötigt. Zudem lässt sich hierdurch eine Kontrolle realisieren, ob die Fahrgastaufnahme, welche eine fehlerhafte Feststelleinheit aufweist, tatsächlich gesperrt worden ist. Das Kommunikationssystem stellt sowohl eine Information über Funktionsfähigkeit der Feststelleinheit als auch über den Zustand der Sicherungseinrichtung bereit. Eine Fahrt kann für den Fall, dass eine Feststelleinheit nicht einwandfrei funktioniert, nur dann begonnen werden, wenn sich die Sicherungseinrichtung derselben Fahrgastaufnahme im verriegelten Zustand befindet. Der verriegelte Zustand kann dann bis zum Betriebsschluss nicht mehr aufgehoben werden.

Eine weitergebildete Ausbildung des Verfahrens umfasst folgende Schritte:
- Entriegeln der Sicherungseinrichtung und insbesondere des Sicherheitsschalters,
- schrittweises Bewegen der Rückhalteeinrichtung und insbesondere des Sicherungsbügels aus der Schließstellung, bis dass das Gegenelement nicht mehr mit dem Halteelement in Kontakt tritt, und
- wenn das Gegenelement nicht mehr in Kontakt mit dem Halteelement tritt, Bewegen der Rückhalteeinrichtung und insbesondere des Sicherungsbügels in die Offenstellung.

Wie erwähnt, kann das Gegenelement mit dem Halteelement selbstöffnend zusammenwirken, wozu beispielsweise eine Feder beim Einbringen des Gegenelements in die Sicherungseinrichtung vorgespannt wird. Beim Entspannen wird die Feder entlastet und schiebt das Gegenelement vom Halteelement weg. Bei dieser Lösung kann es aber sein, dass das Gegenelement unkontrolliert aus der Sicherungseinrichtung herausspringt und gegen Verkleidungsbauteile des Fahrzeugs oder gegen Fahrgäste oder Mitarbeiter des Fahrgeschäfts schlägt. Um dies zu verhindern, wird in dieser Ausbildung des Verfahrens zunächst die Sicherungseinrichtung entriegelt und anschließend das Gegenelement mittels des Sicherungsbügels schrittweise solange aus der Sicherungseinrichtung herausgezogen, bis dass das Gegenelement kein Kontakt mehr mit dem Halteelement aufweist. Der Sicherungsbügel wird hierzu aus der Schließstellung in Richtung der Offenstellung bewegt. Das Gegenelement wird hierbei nur langsam und kontrolliert bewegt. Wenn das Gegenelement weit genug vom Halteelement entfernt ist, kann der Sicherungsbügel in die Offenstellung bewegt werden. Die Information, dass das Gegenelement weit genug vom Haltelement entfernt ist, kann über die Stellung des Sicherungsbügels oder über die Manipulationsdetektionsmittel generiert werden. Wenn beispielsweise der Sicherheitsschalter den RFID-Chip nicht mehr erkennen kann, kann dies als Information gewertet werden, dass der Sicherungsbügel in die Offenstellung bewegt werden kann.

Wenn notwendig, kann der Sicherungsbügel noch eine bestimmte Zeit angehalten werden, wenn das Gegenelement vollständig aus der Sicherungseinrichtung herausgezogen worden ist, beispielsweise, um Pendelbewegungen des Gegenelements abklingen zu lassen und diese nicht noch durch das Bewegen des Sicherungsbügels in die Offenstellung zu verstärken.

Eine Umsetzung der Erfindung betrifft ein Fahrgeschäft mit einem Fahrzeug nach einem der zuvor beschriebenen Ausgestaltungen, wobei das Fahrzeug mit einem Verfahren nach einem der oben erläuterten Ausbildungen betreibbar ist.

Die technischen Effekte und Vorteile, die sich mit dem vorschlagsgemäßen Fahrgeschäft erreichen lassen, entsprechen denjenigen, die für die vorliegende Fahrgastaufnahme, das vorschlagsgemäße Fahrgeschäft und das vorliegende Verfahren erläutert worden sind. Zusammenfassend sei darauf hingewiesen, dass das Fahrzeug mit einer erhöhten Sicherheit und mit weniger von den Fahrgästen verursachten Verzögerungen betrieben werden kann, da Manipulationen seitens der Fahrgäste an der Sicherungseinrichtung erschwert oder unmöglich werden.

Beispielhafte Ausführungsformen der Erfindung werden im Folgenden unter Bezugnahme auf die beigefügten Zeichnungen näher erläutert. Es zeigen
- Figur 1: ein Ausführungsbeispiel eines erfindungsgemäßen Fahrgastaufnahme anhand einer perspektivischen Darstellung,
- Figur 2: die in Figur 1 dargestellte Fahrgastaufnahme anhand einer Vorderansicht,
- Figur 3: eine Schnittdarstellung der Fahrgastaufnahme entlang der in Figur 2 definieren Schnittebene A-A,
- Figur 4: eine vergrößerte Darstellung des in Figur 3 gekennzeichneten Bereichs X,
- Figur 5: eine prinzipielle Draufsicht auf ein erfindungsgemäßes Gegenelement,
- Figur 6: eine prinzipielle Draufsicht auf ein Fahrgeschäft, welches eine Anzahl der erfindungsgemäßen Fahrgastaufnahmen aufweist.
- Figur 7a: eine vorschlagsgemäße Sicherungseinrichtung im verriegelten Zustand, und
- Figur 7b: die in Figur 7a dargestellte Sicherungseinrichtung im entriegelten Zustand, jeweils anhand einer perspektivischen Ansicht.

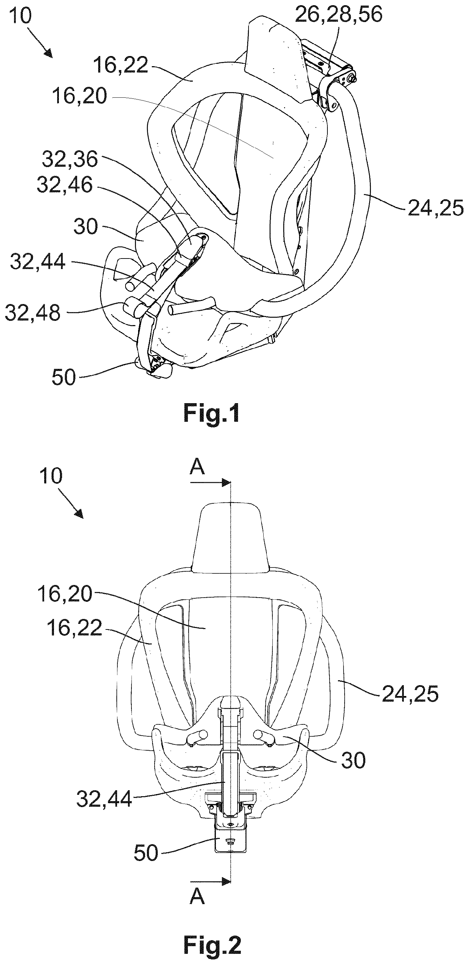

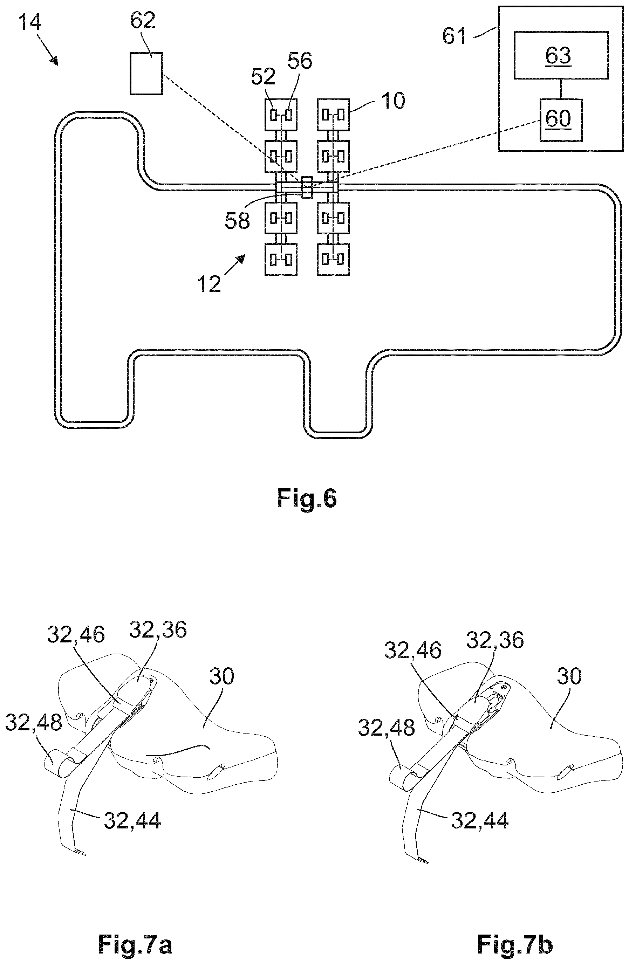

In den Figuren 1 bis 3 ist ein Ausführungsbeispiel der erfindungsgemäßen Fahrgastaufnahme 10 anhand von verschiedenen Ansichten gezeigt. Die Fahrgastaufnahme 10 auf einem Fahrzeug 12 angeordnet, welches in Figur 6 dargestellt ist und welches Teil eines Fahrgeschäfts 14 ist.

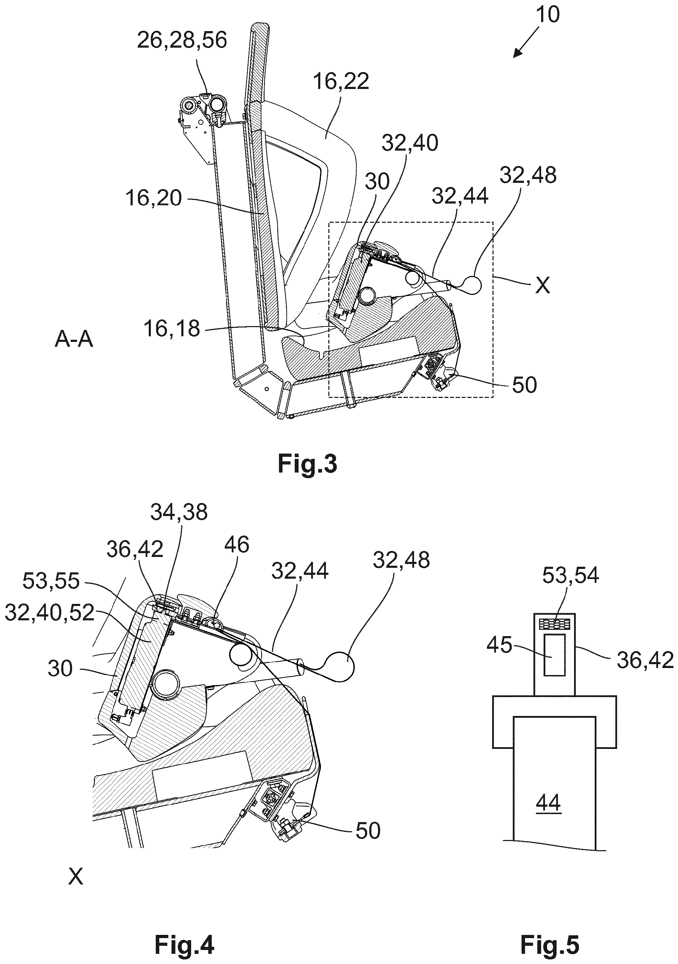

Die Fahrgastaufnahme 10 weist einen Aufnahmeabschnitt 16 auf, die im dargestellten Ausführungsbeispiel als ein Fahrgastsitz ausgestaltet ist, der eine Sitzfläche 18 (siehe Figur 3), eine Rückenlehne 20 und zwei Seitenlehnen 22 umfasst. Zudem weist die Fahrgastaufnahme 10 eine Rückhalteeinrichtung 24 auf, welche einen Sicherungsbügel 25 umfasst, der drehbar an der Fahrgastaufnahme 10 montiert ist und der mittels einer Verstelleinrichtung 26 zwischen einer nicht dargestellten Offenstellung und einer in den Figuren 1 bis 3 gezeigten Schließstellung verstellbar ist. Die Verstelleinrichtung 26 ist in dargestellten Ausführungsbeispiel so eingerichtet, dass sie den Sicherungsbügel 25 in der Offenstellung und in der Schließstellung feststellen kann. Insofern dient die Verstelleinrichtung 26 auch als eine Feststelleinheit 28. Hierzu ist die Verstelleinrichtung 26 bzw. die Feststelleinheit 28 beispielsweise mit einem nicht dargestellten Hydrauliksystem verbunden.

In der Offenstellung ist der Aufnahmeabschnitt 16 für den Fahrgast zugänglich, so dass er sich in den Aufnahmeabschnitt 16 hineinsetzen und wieder aus dieser aussteigen kann.

Der Sicherungsbügel 25 weist ein Oberschenkelpolster 30 auf, welches in der Schließstellung auf die Oberschenkel des im Aufnahmeabschnitt 16 sitzenden, nicht dargestellten Fahrgasts aufgelegt wird.

Darüber hinaus umfasst die erfindungsgemäße Fahrgastaufnahme 10 eine Sicherungseinrichtung 32, welche insbesondere in den Figuren 3 und 4 gut erkennbar ist. Im dargestellten Ausführungsbeispiel umfasst die Sicherungseinrichtung 32 ein Halteelement 34 und ein Gegenelement 36, wobei das Halteelement 34 als ein Vorsprung 38 ausgebildet ist, der auf einem Sicherheitsschalter 40 angeordnet ist. Das Gegenelement 36 ist als eine Gurtzunge 42 ausgestaltet, welche mit einem Gurt 44 verbunden ist und welche eine Öffnung 45 bildet (siehe Figur 5). Darüber hinaus ist eine Gurtlängenverstelleinrichtung 46 vorgesehen, welche den Gurt 44 in einer wählbaren Länge fixiert. Weiterhin bildet der Gurt 44 an seinem freien Ende ein Griffabschnitt 48 der hier als eine Gurtschlaufe ausgeführt ist. An seinem dem freien Ende gegenüberliegenden Ende ist der Gurt 44 mittels eines Entlastungselements 50 an der Fahrgastaufnahme 10 befestigt.

Der Sicherheitsschalter 40 ist im Oberschenkelpolster 30 des Sicherungsbügels 25 angeordnet. Mithilfe des Sicherheitsschalters 40 kann das Halteelement 34 axial bewegt werden. Das Halteelement 34 kann in einer ersten Endstellung formschlüssig in die Öffnung 45 der Gurtzunge 42 eingreifen, während in einer zweiten Endstellung des Halteelements 34 kein formschlüssiger Eingriff möglich ist.

Im Sicherheitsschalter 40 ist eine Kontrolleinheit 52 integriert, die Erkennungsmittel 55 aufweist, mit welchen auf redundante und ausfallsichere Weise eine Aussage darüber getroffen werden kann, ob sich die Sicherungseinrichtung 32 im verriegelten Zustand befindet. Weiterhin weist die Kontrolleinheit 52 Manipulationsdetektionsmittel 53 auf, mit welchen manipulationssicher festgestellt werden kann, ob sich die Sicherungseinrichtung 32 im verriegelten Zustand befindet oder nicht. Die Manipulationsdetektionsmittel 53 umfassen auf dem Gegenelement 36 angeordnete Identifizierungsmittel 54, die beispielsweise als ein RFID-Chip ausgestaltet sein können. Die Kontrolleinheit 52 des Sicherheitsschalters 40 kann dabei die Identifizierungsmittel 54 auslesen und folglich feststellen, ob das richtige Gegenelement 36 in die Sicherungseinrichtung 32 eingebracht worden ist. Darüber hinaus kann der Sicherheitsschalter 40 feststellen, ob das Halteelement 34 tatsächlich formschlüssig in das Gegenelement 36 eingreift. Die Sicherungseinrichtung 32 befindet sich nur dann im verriegelten Zustand, wenn das Halteelement 34 in das als richtig identifizierte Gegenelement 36 eingreift. Der Sicherheitsschalter 40 bildet eine Baueinheit, in welche die Kontrolleinheit 52 und die stationären Komponenten der Sicherungseinrichtung 32 zusammengefasst sind.

Weiterhin weist die Fahrgastaufnahme 10 eine Prüfeinheit 56 auf, mit welcher sich prüfen lässt, ob die Feststelleinheit 28 einwandfrei funktioniert oder nicht. Das Fahrgeschäft 14 kann auch ohne die Prüfeinheit 56 erfindungsgemäß betrieben werden. In diesem Fall wird die Funktionsfähigkeit der Feststelleinheit 28 von den Mitarbeiter des Fahrgeschäfts 14 insbesondere anhand einer visuellen Inspektion geprüft.

Das Fahrgeschäft 14 ist mit einem Kommunikationssystem 58 ausgestattet, welches in Figur 6 gezeigt ist. Das Kommunikationssystem 58 steht in Verbindung mit einer Steuereinheit 60 des Fahrgeschäfts 14 sowie mit der Kontrolleinheit 52 und der Prüfeinheit 56. Die Steuereinheit 60 ist üblicherweise in einem Gebäude 61 angeordnet, in welchem ein für den Betrieb des Fahrgeschäfts 14 verantwortlicher Mitarbeiter arbeitet. Im Gebäude 61 ist ein Display 63 angeordnet, das mit der Steuereinheit 60 verbunden ist und alle relevanten Informationen bezüglich des Zustands des Fahrgeschäfts 12 anzeigt. Zudem kann eine Anzahl von mobilen Endgeräten 62 wie Wearables, Tablets und/oder dergleichen, welche von den Mitarbeitern des Fahrgeschäfts 14 verwendet werden, mit dem Kommunikationssystem 58 verbunden werden.

Sowohl die Kontrolleinheit 52 als auch die Prüfeinheit 56 weisen jeweils eine Kennung auf, welche über das Kommunikationssystem 58 an die Steuereinheit 60 übermittelt werden kann, so dass die Kontrolleinheit 52 und die Prüfeinheit 56 eindeutig identifizierbar sind und der von ihnen überwachten Fahrgastaufnahme 10 zugeordnet werden können.

Das Fahrgeschäft 14 wird auf folgende Weise betrieben: Zunächst wird die Rückhalteeinrichtung 24 mittels der Verstelleinrichtung 26 in die Offenstellung bewegt, so dass ein Fahrgast Zugang zum Aufnahmeabschnitt 16 der Fahrgastaufnahme 10 hat. Nachdem sich der Fahrgast in den Aufnahmeabschnitt 16 gesetzt hat, wird die Rückhalteeinrichtung 24 von der Verstelleinrichtung 26 in die Schließstellung gestellt. Das Verstellen zwischen der Offenstellung und der Schließstellung kann alternativ auch von einem Mitarbeiter des Fahrgeschäfts 14 oder vom Fahrgast selbst übernommen werden. Anschließend wird die Rückhalteeinrichtung 24 mittels der Feststelleinheit 28 in der Schließstellung fixiert. Der Mitarbeiter des Fahrgeschäfts 14 prüft ein körpernahes Anliegen des Sicherungsbügels 25 und zieht an dem Sicherungsbügel 25, um Fehlstellungen und Fehlfunktionen am Sicherungsbügel 25 zu identifizieren. Wenn nicht schon geschehen, zieht der Mitarbeiter oder der Fahrgast den Gurt 44 auf volle Länge. Nun steckt der Mitarbeiter oder der Fahrgast den Gurt 44 mit der Gurtzunge 42 in die Sicherungseinrichtung 32, wie es in Figur 7a dargestellt ist. Der Mitarbeiter oder der Fahrgast kann den Gurt 44 durch Ergreifen am Griffabschnitt 48 anziehen und nachstraffen.

Der Sicherheitsschalter 40 prüft, ob das Halteelement 34 formschlüssig in die Gurtzunge 42 eingreift. Zudem kontrolliert der Sicherheitsschalter 40, ob es sich bei der Gurtzunge 42 um die korrekte Gurtzunge 42 handelt. Gleichzeitig prüft sich der Sicherheitsschalter 40 selbst, ob er einwandfrei funktioniert. Wenn alle Bedingungen erfüllt sind, erzeugt der Sicherheitsschalter 40 ein Zustandssignal, wonach sich die Sicherungseinrichtung 32 im verriegelten Zustand befindet und der Sicherheitsschalter 40 korrekt funktioniert. Das Kommunikationssystem 58 überträgt das Zustandssignal an die Steuereinheit 60 und/oder die mobilen Endgeräte 62.

Gleichzeitig wird von der Prüfeinheit 56 geprüft, ob die Feststelleinheit 28 korrekt funktioniert. Wie bereits erwähnt, kann die Feststelleinheit 28 hydraulisch betrieben werden, so dass die Prüfeinheit 56 beispielsweise anhand eines sogenannten A/B-Tests prüfen kann, ob das Hydrauliksystem Undichtigkeiten aufweist und ein Volumenverlust vorliegt. Für den Fall, dass die Feststelleinheit 28 korrekt funktioniert, generiert die Prüfeinheit 56 ein entsprechendes Funktionsfähigkeitssignal. Das Funktionsfähigkeitssignal wird über das Kommunikationssystem 58 an die Steuereinheit 60 und/oder an die mobilen Endgeräte 62 übermittelt.

Für den Fall, dass die Feststelleinheit 28 nicht korrekt funktioniert, führt der A/B-Test aber in vielen Fällen zu einer für den Mitarbeitern und/oder für die Fahrgäste spürbaren oder sichtbaren Abweichung der Bewegungen des Rückhalteeinrichtung 24 und insbesondere des Sicherungsbügels 25. Beispielsweise bewegt sich der Sicherungsbügel 25 langsamer oder schneller als die benachbarten Sicherungsbügel, kommt an einer anderen Stelle zum Stillstand und/oder verbleibt nicht in der Schließstellung, wenn ein Mitarbeiter des Fahrgeschäfts den Sicherungsbügel körpernah in die Schließstellung drückt. Folglich können die Mitarbeiter und/oder die Fahrgäste ohne ein von einer Prüfeinheit 56 generiertes Funktionsfähigkeitssignal feststellen können, ob die Feststelleinheit 28 korrekt funktioniert oder nicht. Zudem können so auch andere Unregelmäßigkeiten an der Fahrgastaufnahme 10 erkannt werden, beispielsweise ein beschädigtes Oberschenkelpolster 30.

Wenn das Zustandssignal aussagt, dass sich die Sicherungseinrichtung 32 im verriegelten Zustand befindet, die Kontrolleinheit 52 bzw. der Sicherheitsschalter 40 fehlerfrei arbeitet und das Funktionsfähigkeitssignal und/oder die Mitarbeiter des Fahrgeschäfts 14 die Funktionsfähigkeit der Feststelleinheit 28 bestätigen, erzeugt die Steuereinheit 60 ein Freigabesignal, so dass die Fahrt des betreffenden Fahrzeugs 12 beginnen kann.

Sobald die Fahrt abgeschlossen ist, stellt der Sicherheitsschalter 40 das Halteelement 34 in die zweite Endstellung, wodurch die Gurtzunge 42 freigegeben wird. Das Gegenelement 36, in diesem Fall die Gurtzunge 42, wirkt selbstöffnend mit dem Halteelement 34 zusammen. Dies hat zur Folge, dass die Gurtzunge 42 aus der Sicherungseinrichtung 32 hinausgeschoben wird, sobald das Halteelement 34 aus der Öffnung 45 der Gurtzunge 42 entfernt worden ist. Die Sicherungseinrichtung 32 befindet sich dann in einer Stellung, die in Figur 7b gezeigt ist. Anschließend wird die Rückhalteeinrichtung 24 in die Offenstellung bewegt, so dass der Fahrgast die Fahrgastaufnahme 10 verlassen kann.

Für den Fall, dass der Sicherheitsschalter 40 feststellt, dass sich die Sicherungseinrichtung 32 nicht im verriegelten Zustand befindet und/oder der Sicherheitsschalter 40 eine Störung seiner Funktionsfähigkeit feststellt, generiert der Sicherheitsschalter 40 ein Zustandssignal, welches auf diese Situation hinweist. Dieses Zustandssignal wird an die Steuereinheit 60 und an die mobilen Endgeräte 62 weitergeleitet, so dass die Mitarbeiter des Fahrgeschäfts 14 entsprechende Gegenmaßnahmen einleiten können. Dadurch, dass der Sicherheitsschalter 40 eine eindeutige Kennung aufweist, liegen den Mitarbeitern Informationen vor, an welcher Fahrgastaufnahme 10 der sich der betreffende Sicherheitsschalter 40 befindet. Die Mitarbeiter können die betreffende Fahrgastaufnahme 10 direkt aufsuchen.

Für den Fall, dass die Prüfeinheit 56 feststellt, dass die Feststelleinheit 28 nicht mehr einwandfrei funktioniert, gibt die Prüfeinheit 56 ein entsprechendes Funktionsfähigkeitssignal aus, welches mittels des Kommunikationssystems 58 an die Steuereinheit 60 und die mobilen Endgeräte 62 weitergeleitet wird.

Wie erwähnt, kann das Fahrgeschäft 14 auch ohne die Prüfeinheit 56 betrieben werden. Wenn der A/B-Test eine für die Mitarbeiter sichtbare oder spürbare Abweichung der Fahrgastaufnahme 10 und insbesondere der Feststelleinheit 28 vom Sollzustand offenbart, kann der Mitarbeiter, welcher die Abweichungen feststellt, dem im Gebäude 61 sitzende Mitarbeiter beispielsweise per Funk hierauf hinweisen. Mobile Endgeräte 62 in Form von Smartphones oder Tablets, die mit dem Kommunikationssystem 58 kommunizieren, sind nicht erforderlich.

Sobald der Fahrgast die betreffende Fahrgastaufnahme 10 verlassen hat, wird die Rückhalteeinrichtung 24 dieser Fahrgastaufnahme 10 von einem Mitarbeiter in die Schließstellung bewegt und mittels der Sicherungseinrichtung 32 in der Schließstellung fixiert. Für den Fall, dass eine Prüfeinheit 56 vorhanden ist, kann die Steuereinheit 60 so eingerichtet sein, dass die Rückhalteeinrichtung 24 bis zum Betriebsschluss nicht mehr aus der Schließstellung heraus bewegt werden kann. Für den Fall, dass keine Prüfeinheit 56 vorhanden ist, kann der Mitarbeiter, der im Gebäude 61 sitzt, der Steuereinheit 60 einen Befehl geben, wonach die Rückhalteeinrichtung 24 bis zum Betriebsschluss nicht mehr aus der Schließstellung heraus bewegt werden soll.

Folglich bleibt die Fahrgastaufnahme 10, welche die nicht funktionsfähige Feststelleinheit 28 aufweist, bis zum Betriebsschluss des Fahrgeschäfts 14 für die Fahrgäste nicht mehr zugänglich. Nach Betriebsschluss kann die fehlerhafte Feststelleinheit 28 ausgetauscht werden.

### Bezugszeichenliste

- 10: Fahrgastaufnahme
- 12: Fahrzeug
- 14: Fahrgeschäft
- 16: Aufnahmeabschnitt
- 18: Sitzfläche

- 20: Rückenlehne
- 22: Seitenlehne
- 24: Rückhalteeinrichtung
- 25: Sicherungsbügel
- 26: Verstelleinrichtung
- 28: Feststelleinheit

- 30: Oberschenkelpolster
- 32: Sicherungseinrichtung
- 34: Halteelement
- 36: Gegenelement
- 38: Vorsprung

- 40: Sicherheitsschalter
- 42: Gurtzunge
- 44: Gurt
- 45: Öffnung
- 46: Gurtlängenverstelleinrichtung
- 48: Gurtschlaufe

- 50: Entlastungselement
- 52: Kontrolleinheit
- 53: Manipulationsdetektionsmittel
- 54: Identifizierungsmittel
- 55: Erkennungsmittel
- 56: Prüfeinheit
- 58: Kommunikationssystem

- 60: Steuereinheit
- 61: Gebäude
- 62: mobiles Endgerät
- 63: Display

## Patentansprüche

1. Fahrgastaufnahme für ein Fahrgeschäft (14), umfassend
- einen Aufnahmeabschnitt (16) zum Aufnehmen eines Fahrgasts,
- eine Rückhalteeinrichtung (24), welche zwischen einer Offenstellung, in welcher der Zugang zum Aufnahmeabschnitt (16) für den Fahrgast ermöglicht ist, und einer Schließstellung, in welcher der aufgenommene Fahrgast im Aufnahmeabschnitt (16) mit der Rückhalteeinrichtung (24) zusammenwirken kann, verstellbar ist,
- eine verriegelbare Sicherungseinrichtung (32), welche in einem verriegelten Zustand die Rückhalteeinrichtung (24) in der Schließstellung fixiert und in einem entriegelten Zustand die Rückhalteeinrichtung (24) freigibt,
- eine Kontrolleinheit (52), die Erkennungsmittel (55) aufweist, mit welchen redundant und ausfallsicher feststellbar ist, ob sich die Sicherungseinrichtung (32) im verriegelten oder entriegelten Zustand befindet, wobei die Kontrolleinheit (52) entsprechende Zustandssignale erzeugt,
**dadurch gekennzeichnet, dass**
- die Sicherungseinrichtung (32) nur durch befugte Personen in den verriegelten Zustand überführt werden kann und
- die Kontrolleinheit (52) Manipulationsdetektionsmittel (53) aufweist mit welchen manipulationssicher feststellbar ist, ob sich die Sicherungseinrichtung (32) im verriegelten oder entriegelten Zustand befindet.

2. Fahrgastaufnahme nach Anspruch 1,
**dadurch gekennzeichnet, dass** die Sicherungseinrichtung (32) ein an der Fahrgastaufnahme oder an der Rückhalteeinrichtung (24) befestigtes Halteelement (34) und ein relativ zum Halteelement (34) bewegbares Gegenelement (36) aufweist,
wobei das Gegenelement (36) im verriegelten Zustand der Sicherungseinrichtung (32) vom Halteelement (34) ortsfest gehalten wird und die Manipulationsdetektionsmittel (53) zumindest auf dem Gegenelement (36) angeordnete Identifizierungsmittel (54) umfassen, die von der Kontrolleinheit (52) auslesbar sind.

3. Fahrgastaufnahme nach Anspruch 2,
**dadurch gekennzeichnet, dass** die Sicherungseinrichtung (32) einen betätigbaren Sicherheitsschalter (40) umfasst, welcher zum Fixieren und Freigeben der Rückhalteeinrichtung (24) mit dem Halteelement (34) zusammenwirkt.

4. Fahrgastaufnahme nach einem der Ansprüche 2 oder 3,
**dadurch gekennzeichnet, dass** das Halteelement (34) vom Sicherheitsschalter (40) gebildet wird.

5. Fahrgastaufnahme nach einem der vorherigen Ansprüche,
**dadurch gekennzeichnet, dass** die Kontrolleinheit (52) und insbesondere der Sicherheitsschalter (40) derart eingerichtet sind, dass auf PLe-Niveau oder SIL3-Niveau feststellbar ist, ob sich die Sicherungseinrichtung (32) im verriegelten Zustand befindet.

6. Fahrgastaufnahme nach einem der vorherigen Ansprüche,
**dadurch gekennzeichnet, dass** die Kontrolleinheit (52) und die stationären Komponenten der Sicherungseinrichtung (32) zu einer Baueinheit zusammengefasst sind.

7. Fahrgastaufnahme nach Anspruch 2 und einem der Ansprüche 3 bis 6,
**dadurch gekennzeichnet, dass** das Gegenelement (36) selbstöffnend mit dem Halteelement (34) zusammenwirkt.

8. Fahrgastaufnahme nach Anspruch 2 und einem der Ansprüche 3 bis 7,
**dadurch gekennzeichnet, dass** das Gegenelement (36) als eine Gurtzunge (42) ausgebildet ist, welche an einem mit der Rückhalteeinrichtung (24) oder der Fahrgastaufnahme verbundenen Gurt (44) befestigt ist.

9. Fahrgastaufnahme nach Anspruch 8,
**dadurch gekennzeichnet, dass** der Gurt (44) eine Gurtlängenverstelleinrichtung (46) umfasst.

10. Fahrgastaufnahme nach einem der Ansprüche 8 oder 9,
**dadurch gekennzeichnet, dass** der Gurt (44) an seinem freien Ende einen Griffabschnitt (48), insbesondere eine Gurtschlaufe bildet.

11. Fahrgastaufnahme nach einem der Ansprüche 8 bis 10,
**dadurch gekennzeichnet, dass** der Gurt (44) an seinem festen Ende mit einem Entlastungselement (50) verbunden ist.

12. Fahrgastaufnahme nach einem der vorherigen Ansprüche,
**dadurch gekennzeichnet, dass** die Fahrgastaufnahme eine Feststelleinheit (28) aufweist, mit welcher die Rückhalteeinrichtung (24) zumindest in der Schließstellung feststellbar ist.

13. Fahrgastaufnahme nach Anspruch 12,
**dadurch gekennzeichnet, dass** die Fahrgastaufnahme eine Prüfeinheit (56) umfasst, mit welcher die Funktionsfähigkeit der Feststelleinheit (28) feststellbar ist, wobei die Prüfeinheit (56) entsprechende Funktionsfähigkeitssignale erzeugt.

14. Fahrzeug für ein Fahrgeschäft (14), welches mindestens eine Fahrgastaufnahme (10) nach einem der vorherigen Ansprüche aufweist.

15. Fahrzeug nach Anspruch 14,
**dadurch gekennzeichnet, dass** das Fahrzeug (12)
- mindestens zwei der Fahrgastaufnahmen (10), und
- ein mit der Kontrolleinheit (52) kommunizierendes Kommunikationssystem (58) aufweist, mit welchem die Zustandssignale der Kontrolleinheit (52) der betreffenden Fahrgastaufnahme (10) eindeutig zuordenbar sind.

16. Fahrzeug nach Anspruch 15,
**dadurch gekennzeichnet, dass** das Kommunikationssystem (58) mit der Prüfeinheit (56) derart kommuniziert, dass die Funktionsfähigkeitssignale der Prüfeinheit (56) der betreffenden Fahrgastaufnahme (10) zuordenbar sind.

17. Verfahren zum Betreiben eines Fahrzeugs nach einem der Ansprüche 14-16, umfassend folgende Schritte:
- Bewegen der Rückhalteeinrichtung (24) in die Schließstellung,
- Fixieren der Rückhalteeinrichtung (24) in der Schließstellung mittels der Sicherungseinrichtung (32), die in den verriegelten Zustand versetzt wurde, und
- redundantes und ausfallsicheres Feststellen, ob sich die Sicherungseinrichtung (32) im verriegelten Zustand befindet mittels der Erkennungsmittel (55) und Erzeugen eines entsprechenden Zustandssignals mittels der Kontrolleinheit (52)
**dadurch gekennzeichnet, dass**:
- die Sicherungseinrichtung (32) nur durch befugte Personen in den verriegelten Zustand überführt werden kann und
- manipulationssicher feststellbar ist, ob sich die Sicherungseinrichtung (32) im verriegelten Zustand befindet mittels der Manipulationsdetektionsmittel (53) und Erzeugen eines entsprechenden Signals mittels der Kontrolleinheit (52)

18. Verfahren nach Anspruch 17, umfassend folgende Schritte:
- Prüfen der Funktionsfähigkeit der Feststelleinheit (28) und Erzeugen von entsprechenden Funktionsfähigkeitssignalen mittels der Prüfeinheit (56).

19. Verfahren nach Anspruch 18, umfassend folgende Schritte:
- Zuordnen der Funktionsfähigkeitssignale der betreffenden Fahrgastaufnahme (10) mittels des Kommunikationssystems (58),
- für den Fall, dass die Funktionsfähigkeit der Feststelleinheit (28) der betreffenden Fahrgastaufnahme (10) nicht gegeben ist, Sperren der betreffenden Fahrgastaufnahme (10) durch Fixieren der Rückhalteeinrichtung (24) in der Schließstellung.

20. Verfahren nach Anspruch 19 umfassend folgende Schritte:
- Fixieren der Rückhalteeinrichtung (24) in der Schließstellung durch Verriegeln der Sicherungseinrichtung (32) .

21. Verfahren nach einem der Ansprüche 17 bis 20, umfassend folgende Schritte:
- Entriegeln der Sicherungseinrichtung (32) und insbesondere des Sicherheitsschalters (40),
- schrittweises Bewegen der Rückhalteeinrichtung (24) und insbesondere des Sicherungsbügels (25) aus der Schließstellung, bis dass das Gegenelement (36) nicht mehr mit dem Halteelement (34) in Kontakt tritt, und
- wenn das Gegenelement (36) nicht mehr in Kontakt mit dem Halteelement (34) tritt, Bewegen der Rückhalteeinrichtung (24) und insbesondere des Sicherungsbügels (25) in die Offenstellung.

22. Fahrgeschäft (14) mit einem Fahrzeug (12) nach einem der Ansprüche 14-16, wobei das Fahrzeug (12) mit einem Verfahren nach einem der Ansprüche 17-21 betreibbar ist.

## Claims

1. A rider holder for an amusement ride (14), comprising
- a holding portion (16) for holding a rider,
- a restraining device (24) which can be adjusted between an open position, in which the rider can access the holding portion (16), and a closed position, in which the rider held in the holding portion (16) can interact with the restraining device (24),
- a lockable safety device (32) which, in a locked state, secures the restraining device (24) in the closed position and, in an unlocked state, releases the restraining device (24),
- a control unit (52) which comprises detection means (55), by means of which it can be redundantly detected in a fail-safe manner whether the safety device (32) is in the locked or unlocked state, wherein the control unit (52) generates corresponding state signals,
**characterized in that**
- the safety device (32) can be transferred into the locked state by authorized persons only and
- the control unit (52) comprises tampering detection means (53), by means of which it is possible to detect in a tamper-proof manner whether the safety device (32) is in the locked or unlocked state.

2. The rider holder according to claim 1,
**characterized in that** the safety device (32) comprises a holding element (34) fastened on the rider holder or on the restraining device (24), and a counter-element (36) which can be moved relative to the holding element (34), wherein the counter-element (36), in the locked state of the safety device (32), is fixedly held by the holding element (34), and the tampering detection means (53) comprises identification means (54) arranged at least on the counter-element (36), which identification means can be read by the control unit (52).

3. The rider holder according to claim 2,
**characterized in that** the safety device (32) comprises an actuatable safety switch (40), which interacts with the holding element (34) for securing and releasing the restraining device (24) .

4. The rider holder according to either of claims 2 or 3,
**characterized in that** the holding element (34) is formed by the safety switch (40).

5. The rider holder according to any one of the preceding claims,
**characterized in that** the control unit (52) and in particular the safety switch (40) are configured in such a manner that, on the PLe level or the SIL3 level, it can be detected whether the safety device (32) is in the locked state.

6. The rider holder according to any one of the preceding claims,
**characterized in that** the control unit (52) and the stationary components of the safety device (32) are combined to form a physical unit.

7. The rider holder according to claim 2 and any one of claims 3 to 6,
**characterized in that** the counter-element (36) interacts with the holding element (34) in a self-opening manner.

8. The rider holder according to claim 2 and any one of claims 3 to 7,
**characterized in that** the counter-element (36) is designed as a belt tongue (42) which is fastened on a belt (44) connected to the restraining device (24) or the rider holder.

9. The rider holder according to claim 8,
**characterized in that** the belt (44) comprises a belt length adjustment device (46).

10. The rider holder according to either of claims 8 or 9,
**characterized in that** the belt (44), on its free end, forms a handle section (48), in particular a belt loop.

11. The rider holder according to any one of claims 8 to 10,
**characterized in that** the belt (44) is connected at its secured end to a load relief element (50).

12. The rider holder according to any one of the preceding claims,
**characterized in that** the rider holder comprises a locking unit (28) by means of which the restraining device (24) can be locked at least in the closed position.

13. The rider holder according to claim 12,
**characterized in that** the rider holder comprises a testing unit (56), by means of which the functional capability of the locking unit (28) can be detected, wherein the testing unit (56) generates corresponding functional capability signals.

14. A vehicle for an amusement ride (14), which comprises at least one rider holder (10) according to any one of the preceding claims.

15. The vehicle according to claim 14,
**characterized in that** the vehicle (12) comprises
- at least two of the rider holders (10), and
- a communication system (58) communicating with the control unit (52), by means of which communication system the state signals of the control unit (52) can be unequivocally associated with the rider holder (10) in question.

16. The vehicle according to claim 15,
**characterized in that** the communication system (58) communicates with the testing unit (56) in such a manner that the functional capability signals of the testing unit (56) can be associated with the rider holder (10) in question.

17. A method for operating a vehicle according to any one of claims 14 to 16, comprising the following steps:
- moving the restraining element (24) into the closed position,
- securing the restraining device (24) in the closed position by means of the safety device (32) which has been moved into the locked state, and
- redundantly detecting in a fail-safe manner whether the safety device (32) is in the locked state by means of the detection means (55) and generating a corresponding state signal by means of the control unit (52)
**characterized in that**:
- the safety device (32) can only be transferred into the locked state by authorized persons, and
- it can be detected in a tamper-proof manner whether the safety device (32) is in the locked state by means of the tampering detection means (53) and the generating of a corresponding signal by means of the control unit (52).

18. The method according to claim 17, comprising the following steps:
- testing the functional capability of the locking unit (28) and generating corresponding functional capability signals by means of the testing unit (56).

19. The method according to claim 18, comprising the following steps:
- associating the functional capability signals with the rider holder (10) in question by means of the communication system (58),
- in the case in which the functional capability of the locking unit (28) of the rider holder (10) in question is not present, blocking the rider holder (10) in question by securing the restraining device (24) in the closed position.

20. The method according to claim 19, comprising the following steps:
- securing the restraining device (24) in the closed position by locking the safety device (32).

21. The method according to any one of claims 17 to 20, comprising the following steps:
- unlocking the safety device (32) and in particular the safety switch (40),
- moving the restraining device (24) and in particular the safety catch (25) stepwise from the closed position until the counter-element (36) is no longer in contact with the holding element (34), and
- when the counter-element (36) is no longer in contact with the holding element (34), moving the restraining device (24) and in particular the safety catch (25) into the open position.

22. An amusement ride (14) with a vehicle (12) according to any one of claims 14 to 16,
wherein the vehicle (12) can be operated by a method according to any one of claims 17 to 21.

## Revendications

1. Accueil de passager pour un manège (14), comprenant
- une section d'accueil (16) pour l'accueil d'un passager,
- un dispositif de retenue (24), lequel est réglable entre une position ouverte, dans laquelle l'accès à la section d'accueil (16) est possible pour le passager, et une position fermée, dans laquelle le passager accueilli peut coopérer avec le dispositif de retenue (24) dans la section d'accueil (16),
- un dispositif de sécurité (32) verrouillable, lequel fixe le dispositif de retenue (24) dans la position fermée dans un état verrouillé et libère le dispositif de retenue (24) dans un état déverrouillé,
- une unité de contrôle (52), qui présente des moyens de détection (55), avec lesquels il peut être établi de façon redondante et sans panne si le dispositif de sécurité (32) se trouve dans l'état verrouillé ou déverrouillé, dans lequel l'unité de contrôle (52) génère des signaux d'état correspondants,
**caractérisé en ce que**
- le dispositif de sécurité (32) peut être amené à l'état verrouillé uniquement par des personnes autorisées et
- l'unité de contrôle (52) présente des moyens de détection de manipulation (53) avec lesquels il peut être établi protégé contre la manipulation si le dispositif de sécurité (32) se trouve dans l'état verrouillé ou déverrouillé.

2. Accueil de passager selon la revendication 1,
**caractérisé en ce que** le dispositif de sécurité (32) présente un élément de maintien (34) fixé à l'accueil de passager ou au dispositif de retenue (24) et un contre-élément (36) déplaçable par rapport à l'élément de maintien (34), dans lequel le contre-élément (36) est maintenu de façon stationnaire dans l'état verrouillé du dispositif de sécurité (32) par l'élément de maintien (34) et les moyens de détection de manipulation (53) comprennent des moyens d'identification (54) agencés au moins sur le contre-élément (36), qui peuvent être lus par l'unité de contrôle (52).

3. Accueil de passager selon la revendication 2,
**caractérisé en ce que** le dispositif de sécurité (32) comprend un interrupteur de sécurité (40) actionnable, lequel coopère pour la fixation et la libération du dispositif de retenue (24) avec l'élément de maintien (34).

4. Accueil de passager selon l'une quelconque des revendications 2 ou 3,
**caractérisé en ce que** l'élément de maintien (34) est formé par l'interrupteur de sécurité (40).

5. Accueil de passager selon l'une quelconque des revendications précédentes,
**caractérisé en ce que** l'unité de contrôle (52) et en particulier l'interrupteur de sécurité (40) sont aménagés de sorte qu'il peut être établi au niveau PLe ou au niveau SIL3 si le dispositif de sécurité (32) se trouve dans l'état verrouillé.

6. Accueil de passager selon l'une quelconque des revendications précédentes,
**caractérisé en ce que** l'unité de contrôle (52) et les composants stationnaires du dispositif de sécurité (32) sont regroupés en une unité de construction.

7. Accueil de passager selon la revendication 2 et l'une quelconque des revendications 3 à 6,
**caractérisé en ce que** le contre-élément (36) coopère de manière auto-ouvrante avec l'élément de maintien (34).

8. Accueil de passager selon la revendication 2 et l'une quelconque des revendications 3 à 7,
**caractérisé en ce que** le contre-élément (36) est réalisé en tant que languette de ceinture (42), laquelle est fixée à une ceinture (44) reliée au dispositif de retenue (24) ou à l'accueil de passager.

9. Accueil de passager selon la revendication 8,
**caractérisé en ce que** la ceinture (44) comprend un dispositif de réglage de longueur de ceinture (46).

10. Accueil de passager selon l'une quelconque des revendications 8 ou 9,
**caractérisé en ce que** la ceinture (44) forme à son extrémité libre une section de préhension (48), en particulier une boucle de ceinture.

11. Accueil de passager selon l'une quelconque des revendications 8 à 10,
**caractérisé en ce que** la ceinture (44) est reliée à son extrémité fixe à un élément de décharge (50).

12. Accueil de passager selon l'une quelconque des revendications précédentes,
**caractérisé en ce que** l'accueil de passager présente une unité de blocage (28), avec laquelle le dispositif de retenue (24) peut être bloqué au moins dans la position fermée.

13. Accueil de passager selon la revendication 12,
**caractérisé en ce que** l'accueil de passager comprend une unité d'essai (56), avec laquelle la capacité de fonctionnement de l'unité de blocage (28) peut être établie, dans lequel l'unité d'essai (56) génère des signaux de capacité de fonctionnement correspondants.

14. Véhicule pour un manège (14), lequel présente au moins un accueil de passager (10) selon l'une quelconque des revendications précédentes.

15. Véhicule selon la revendication 14,
**caractérisé en ce que** le véhicule (12) présente
- au moins deux des accueils de passager (10), et
- un système de communication (58) communiquant avec l'unité de contrôle (52), avec lequel les signaux d'état de l'unité de contrôle (52) peuvent être associés de manière univoque à l'accueil de passager (10) concerné.

16. Véhicule selon la revendication 15,
**caractérisé en ce que** le système de communication (58) communique avec l'unité d'essai (56) de sorte que les signaux de capacité de fonctionnement de l'unité d'essai (56) peuvent être associés à l'accueil de passager (10) concerné.

17. Procédé pour faire fonctionner un véhicule selon l'une quelconque des revendications 14-16, comprenant les étapes suivantes :
- déplacement du dispositif de retenue (24) dans la position fermée,
- fixation du dispositif de retenue (24) dans la position fermée au moyen du dispositif de sécurité (32), qui a été mis dans l'état verrouillé, et
- établissement redondant et sans panne du fait si le dispositif de sécurité (32) se trouve dans l'état verrouillé au moyen des moyens de détection (55) et génération d'un signal d'état correspondant au moyen de l'unité de contrôle (52)
**caractérisé en ce que** :
- le dispositif de sécurité (32) peut être amené à l'état verrouillé uniquement par des personnes autorisées et
- il peut être établi protégé contre la manipulation si le dispositif de sécurité (32) se trouve dans l'état verrouillé au moyen des moyens de détection de manipulation (53) et génération d'un signal correspondant au moyen de l'unité de contrôle (52).

18. Procédé selon la revendication 17, comprenant les étapes suivantes :
- vérification de la capacité de fonctionnement de l'unité de blocage (28) et génération de signaux de capacité de fonctionnement correspondants au moyen de l'unité d'essai (56).

19. Procédé selon la revendication 18, comprenant les étapes suivantes :
- association des signaux de capacité de fonctionnement à l'accueil de passager (10) concerné au moyen du système de communication (58),
- dans le cas où la capacité de fonctionnement de l'unité de blocage (28) de l'accueil de passager (10) concerné n'est pas donnée, blocage de l'accueil de passager (10) concerné par fixation du dispositif de retenue (24) dans la position fermée.

20. Procédé selon la revendication 19 comprenant les étapes suivantes :
- fixation du dispositif de retenue (24) dans la position fermée par verrouillage du dispositif de sécurité (32).

21. Procédé selon l'une quelconque des revendications 17 à 20, comprenant les étapes suivantes :
- déverrouillage du dispositif de sécurité (32) et en particulier de l'interrupteur de sécurité (40),
- déplacement progressif du dispositif de retenue (24) et en particulier de l'étrier de sécurité (25) hors de la position fermée, jusqu'à ce que le contre-élément (36) ne soit plus en contact avec l'élément de maintien (34), et
- lorsque le contre-élément (36) n'est plus en contact avec l'élément de maintien (34), déplacement du dispositif de retenue (24) et en particulier de l'étrier de sécurité (25) dans la position ouverte.

22. Manège (14) avec un véhicule (12) selon l'une quelconque des revendications 14-16,
dans lequel le véhicule (12) peut fonctionner avec un procédé selon l'une quelconque des revendications 17-21.
